# EUROPEAN PATENT APPLICATION

(11) **EP 4 621 889 A1**
(43) Date of publication of application: **24.09.2025**
(21) Application number: 24216030.7
(22) Date of filing: 28.11.2024
(51) Int. Cl.: H01M 8/0206, H01M 8/0208, H01M 8/0213, H01M 8/0215, H01M 8/0228, H01M 8/0221, H01M 8/10

(54) **FUEL CELL SEPARATOR AND METHOD FOR PRODUCING FUEL CELL SEPARATOR**

(30) Priority: 22.03.2024 JP 2024046346
(71) Applicant: Plasma Ion Assist Co., Ltd., Kyoto-shi, Kyoto 612-8373 (JP)
(72) Inventor: SUZUKI, Yasuo, Otsu-shi, Shiga, 520-0225 (JP); WATANABE, Masanori, Katano-shi, Osaka, 576-0021 (JP); OGATA, Kiyoshi, Yawata-shi, Kyoto, 614-8351 (JP)
(74) Representative: Müller Hoffmann & Partner

(57) **Abstract**

A fuel cell separator including a passivation metal layer and a conductive carbon film stacked on a surface of an aluminum metal base material, in which the fuel cell separator includes an alloy layer including an aluminum metal of the aluminum metal base material and a passivation metal of the passivation metal layer at a bonding interface between the aluminum metal base material and the passivation metal layer.

## Description

### Technical Field

The present invention relates to an inexpensive solid polymer electrolyte fuel cell separator having excellent corrosion resistance and small volume resistance.

### Background Art

Fuel cells have recently attracted attention as energy sources for solving global environmental problems and energy problems. In particular, solid polymer electrolyte fuel cells (hereinafter, also simply referred to as fuel cell) can be operated at a low temperature and can be reduced in size and weight. Thus, application of the solid polymer electrolyte fuel cells to household power sources and fuel cell vehicles has been studied.

A separator is one of important components constituting a fuel cell. Characteristics required for this separator include excellent corrosion resistance in an acidic solution (fuel cell operation environment), high mechanical strength against vibration and the like, small contact resistance with a gas diffusion member (for example, a gas diffusion member (hereinafter, also referred to as GDL) such as carbon paper) serving as an anode electrode and a cathode electrode, excellent workability such as grooving, being lightweight, and being inexpensive.

Recently, a metal base material such as a stainless steel sheet or titanium has been mainly studied as a base material of a separator satisfying the above-described various characteristics. It is said that a separator using a metal such as stainless steel, titanium, or an alloy thereof can obtain corrosion resistance by forming a passive film on the surface, but it cannot be said this is necessarily sufficient. In addition, it is known that the passive film increases the contact resistance with the gas diffusion member serving as the anode electrode and the cathode electrode, and thus inhibits the conductivity and reduces the power generation efficiency of the fuel cell.

On the other hand, aluminum, a magnesium alloy, or the like has been studied as a lightweight and inexpensive separator base material, but an insulating oxide film is easily formed on the surface of the base material, and corrosion resistance is not sufficient.

The above-described problem may similarly occur in a fuel cell current collecting member.

Patent Literature 1 discloses a fuel cell separator technology in which a titanium base material considered to be most excellent in corrosion resistance is employed as a fuel cell separator, and a titanium carbide layer and a conductive carbon film are stacked on the surface of the titanium base material. It has been shown that the separator has excellent corrosion resistance in the operation environment of the fuel cell by using an expensive titanium base material.

Patent Literature 2 discloses a fuel cell separator having a mixing layer formed of a base metal and a titanium metal at a bonding interface between a metal base material and a titanium metal layer. This makes it possible to significantly increase the bonding force between the metal base material and the titanium metal layer.

### Citation List

### Patent Literature

Patent Literature 1: JP 2019-106345 A
Patent Literature 2: JP 2021-093298 A
Patent Literature 3: JP 2013-178914 A

### Summary of Invention

### Technical Problem

Although the fuel cell separator disclosed in Patent Literature 1 is excellent in corrosion resistance, the contact resistance at the interface between the conductive carbon film and the GDL in contact with the surface, the change with time of the contact resistance, and the like are not clearly described. The conductive carbon film is considered to be excellent in corrosion resistance, but when the surface temperature of the base material has increased, pinholes originally present become defects, and corrosion resistance deteriorates. In addition, titanium is a rare metal and is expensive, and there remains a large problem in mass production in the future.

In the mixing layer disclosed in Patent Literature 2, the metal base material and the titanium metal are simply mixed, and the crystal structure of the metal base material and the crystal structure of the titanium metal are separately mixed. The mixing layer contributes to improvement of adhesion force between the metal base material and the titanium metal layer, but the layer does not significantly contribute to improvement of corrosion resistance.

A problem to be solved by the present invention is to provide a fuel cell separator (hereinafter, also simply referred to as separator) that uses an inexpensive and lightweight metal base material, for example, an aluminum metal base material (hereinafter, also referred to as aluminum base material), is excellent in corrosion resistance, and has low contact resistance. An object of the present invention is to provide a separator and a fuel cell using the separator at low cost. The present invention is also applicable to a fuel cell current collecting member (hereinafter, also simply referred to as current collecting member).

### Solution to Problem

The present invention has been made to solve the above problems and provides the fuel cell separator and the method for producing the fuel cell separator described below.

The present invention has a basic form in which a passivation metal layer, for example, a titanium metal layer (hereinafter, also simply referred to as titanium metal layer) is stacked on a surface of an inexpensive aluminum base material, and a conductive carbon film (hereinafter, also referred to as carbon film) is stacked on a surface of the titanium metal layer. The present invention includes a chemically extremely stable TiAl alloy layer at the interface between the aluminum base material and the passivation metal layer. In addition, the present invention is characterized in that a conductive ceramic layer is provided at the interface between the titanium metal layer and the conductive carbon film. As the conductive ceramic layer, titanium carbide, titanium nitride, or the like is suitable.

In the present specification, a stacked member including the TiAl alloy layer, the titanium layer, the conductive ceramic layer, and the conductive carbon film is referred to as anticorrosion barrier layer.

The TiAl alloy layer has chemically extremely excellent corrosion resistance. According to the present invention, a suitable thickness of the TiAl alloy layer is 10 nm to 100 nm. A suitable thickness of the titanium layer is 100 nm to 1 µm. Interposing the TiAl alloy layer at the interface between the aluminum base material and the titanium metal layer makes it possible to significantly increase the bonding force between the aluminum base material and the titanium metal layer.

According to the results of implementation by the inventors of the present invention, the uneven surface of the base material generated in the anticorrosion barrier layer by the passivation metal cannot be completely covered, and thus it is extremely difficult to completely eliminate the penetrating defect portion, but corrosion resistance is improved by forming the anticorrosion barrier layer in which the conductive carbon film is stacked on the passivation metal layer surface. The conductive carbon film plays a role of improving corrosion resistance by sealing the defect portion and reducing contact resistance at the contact interface with the GDL electrode in contact with the defect portion. The resistivity of the conductive carbon film is preferably as low as possible, but a suitable range is 0.01 Ω·cm to 1 Ω·cm.

Further, in the separator according to the present invention, corrosion resistance is further enhanced by interposing a conductive ceramic layer at the interface between the titanium metal layer and the conductive carbon film. Examples of a suitable conductive ceramic layer includes a titanium carbide film, a titanium nitride film, and an oxide chromium film.

According to the present invention, after the anticorrosion barrier layer is formed on the surface of the metal base material, or after the metal base material is pressed into a separator shape, the metal base material is immersed in a concentrated nitric acid solution or the like to form a passivation film on the surface of the metal base material or the surface of the titanium metal at the penetrating defect portion, thereby improving corrosion resistance and maintaining the corrosion resistance.

### Advantageous Effects of Invention

According to the present invention, by forming the titanium metal layer or the like on the aluminum base material and the surface thereof with the alloy layer interposed therebetween, a titanium metal layer having strong adhesion force can be formed. Accordingly, by forming a titanium metal layer excellent in corrosion resistance on the surface of a relatively inexpensive metal base material such as an aluminum plate and stacking a conductive carbon film on the surface of the titanium metal layer, it is possible to provide a fuel cell separator excellent in corrosion resistance and small in contact resistance at the interface with the GDL. In addition, occurrence of pitting corrosion can be suppressed, and elution of metal ions can be reduced to an allowable value or less by covering the penetrating defect portion remaining in the anticorrosion barrier layer with the passivation film. In addition, a lightweight and inexpensive aluminum base material can be used.

### Brief Description of Drawings

Fig. 1 is a schematic view illustrating a configuration of a solid polymer electrolyte fuel cell according to the present invention.
Fig. 2 is a schematic sectional view of a surface layer portion of a fuel cell separator according to the present invention.
Fig. 3 is a view illustrating the corrosion resistance of a separator according to the present invention.
Fig. 4 is a view illustrating the power generation characteristics of a fuel cell using the separator according to the present invention.

### Description of Embodiments

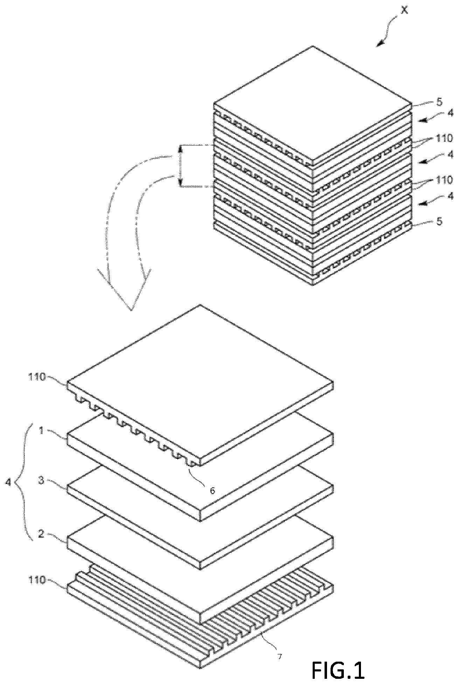

First, an outline of a fuel cell X of the present embodiment will be described. The fuel cell X is used, for example, in a fuel cell vehicle or the like, and as illustrated in Fig. 1, the fuel cell is configured by stacking cells 4 including a gas diffusion member 1 serving as a fuel electrode, a gas diffusion member 2 including an air electrode, and an electrolyte membrane 3 sandwiched between the gas diffusion members. A current collecting member 5 is provided in an upper stage portion and a lower stage portion, and a separator 110 is provided between the cell 4 and the cell 4. Gas passages 6 and 7 for respectively supplying fuel gas and oxidant gas are formed in the separator 110.

The current collecting member 5 is formed thicker than the separator 110, but it has substantially the same configuration as the separator 110 and is produced in the same manner as the separator.

The embodiment of the separator 110 according to the present invention is roughly divided into three steps, an anticorrosion barrier layer forming step 1 of forming an anticorrosion barrier layer 16 in which a titanium metal layer 13 and a conductive carbon film 15 are stacked on a surface of a sheet-like metal base material 11, a press molding step 2 of molding the metal base material into a separator 110 having grooves 6, 7 and the like with an uneven shape serving as a gas channel, and a passivation treatment step 3 of forming a passivation film at a penetrating defect portion present in the stacked anticorrosion barrier layer 16. In the present specification, the first and third implementation steps will be mainly described.

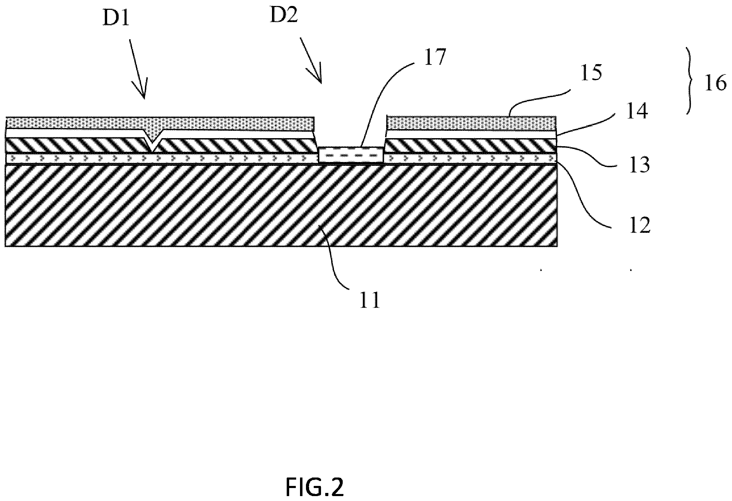

Hereinafter, an embodiment of the fuel cell separator 110 will be described with reference to the drawings. Fig. 2 is a schematic sectional view of a surface layer portion of the fuel cell aluminum separator 110. The separator 110 is characterized by including an anticorrosion barrier layer 16 formed of a titanium metal layer 13 formed on at least one main surface of the metal base material 11, for example, an aluminum alloy base material, and a conductive carbon film 15 stacked on a surface of the titanium metal layer 13. A TiAl alloy layer of an aluminum base material metal and a titanium metal is formed at a bonding interface between the aluminum base material 11 and the titanium metal layer 13. Also at a bonding interface between the titanium metal layer 13 and the conductive carbon film 15, a conductive ceramic layer made of titanium carbide, titanium nitride, or the like, which is a compound of titanium metal and carbon or nitrogen, is interposed.

The TiAl alloy layer 12 is a bonding interface in which both metals are integrated, and it is expected that not only the bonding strength between both metal layers becomes extremely strong but also conductivity and corrosion resistance are remarkably improved. Here, the TiAl alloy means that aluminum atoms and titanium atoms are present in the same crystal lattice. The TiAl alloy layer 12 in the present embodiment is, for example, a material based on a lamellar structure composed of TiAl (γ phase) and a small amount of Ti₃Al (α₂ phase).

As the interface alloy layer 12, a TiAl alloy layer can be formed on the surface of the metal base material by a titanium arc vapor deposition method or the like while the base material temperature is maintained at 200 to 400°C. Alternatively, a titanium thin layer having a thickness of about 20 to 100 nm is formed in advance on the surface of the aluminum base material, and titanium atoms are implanted into the surface of the metal base material by irradiating the titanium thin layer with argon ions or mixed ions of argon and titanium accelerated to high energy, for example, 5 to 20 keV, whereby the TiAl alloy layer can be formed. Alternatively, the TiAl alloy layer can be formed by directly implanting high-energy titanium ions into the surface of the base material while maintaining the base material temperature at 200 to 400°C. The thickness of the TiAl alloy layer is preferably thicker, but the thickness is about 20 to 100 nm because high-energy ion irradiation is required.

By bonding via the interface alloy layer 12, the bonding force between the metal base material 11 and the titanium metal layer 13 can be significantly improved. For example, in a sample in which the titanium metal layer 13 having a thickness of about 1 µm is formed on the surface of an aluminum plate having a thickness of 200 µm with an interface compound layer interposed therebetween, peeling or cracking of the titanium metal layer does not occur even in 200 times of 90 degree bending test.

It is known that the TiAl binary alloy layer is excellent in oxidation resistance and is not oxidized at 800°C or less. In addition, it has been reported that a TiAl alloy to which Nb or Si is added exhibits oxidation resistance characteristics of Alloy713C which is a nickel-cast alloy. According to the present invention, occurrence of pitting corrosion and growth of pitting corrosion are significantly suppressed by the anticorrosion barrier layer 16 including the TiAl alloy layer.

It is difficult to totally eliminate a fine defect portion D1 caused by dust, pinholes, or the like generated in the process of forming the anticorrosion barrier layer 16 on the surface of the aluminum base material 11, or a penetrating defect portion D2 caused by cracks or peeling generated in the pressing process, and it is not practical. The aluminum base material can be put to practical use by sealing the defect portions or covering the defect portions with the passivation film 17. Details will be described below.

According to the present invention, an inexpensive metal base material such as aluminum, stainless steel, or zinc, an alloy base material containing these metals as a main component, or a stacking base material of these metals can be used as the metal base material 11. Needless to say, an expensive metal base material such as titanium or nickel can also be used.

A feature of the present invention is the practical application of a fuel cell separator using an inexpensive and lightweight aluminum base material. The aluminum base material is not particularly limited, but high-purity aluminum having a purity of 99 wt% or more, for example, JIS specified 1000 series alloy (industrial pure aluminum) can be used. High purity aluminum has a high thermal conductivity (about 200 W/m K), and it is suitable as the separator 110. In consideration of corrosion resistance, workability, mechanical strength, and the like, aluminum alloys such as 3000 series alloys (Al-Mn-based alloys), 5000 series alloys (Al-Mg-based alloys), 6000 series alloys (Al-Mg-Si-based alloys), or 8000 series alloys (Al-Fe-Si-based alloys) can be used. The aluminum-based base material is not only lightweight but also has a large electrical conductivity and thermal conductivity, and is the most desirable material as a separator base material.

In the separator 110 of the present invention, the titanium metal layer 13 is formed with the TiAl alloy layer 12 interposed between the titanium metal layer and the base material, and a conductive carbon film is stacked on a surface of the titanium metal layer with the conductive ceramic layer 14 interposed therebetween to form the anticorrosion barrier layer 16. It is known that the surface of the titanium metal layer is excellent in corrosion resistance because the surface is in a passivation state in the entire potential region of 0 to 1 V which is a normal fuel cell use environment. By forming a titanium metal layer on the surface of a metal base material, for example, an aluminum base material, a metal base material having corrosion resistance substantially equivalent to that of a titanium metal base material is obtained. The thickness of the titanium metal layer 13 is preferably as thick as possible, but there is a limit in consideration of processing cost and the like. The thickness of the titanium metal layer is 50 nm to 5 µm, and a more suitable thickness is 100 nm to 2 µm. Although a method for forming the titanium metal layer 13 is not specified, a titanium metal layer having any thickness can be formed by, for example, a titanium arc vapor deposition method.

The conductive carbon film 15 may be directly stacked on the surface of the titanium metal layer 13, but the conductive ceramic layer 14 may be interposed at the bonding interface between the titanium metal layer 13 and the conductive carbon film 15. The role of the conductive ceramic layer 14 is to prevent the surface of the titanium metal layer from being oxidized and passivated in the fuel cell use environment and to suppress an increase in contact resistance at the interface with the GDL serving as the gas diffusion layer. Thus, the conductive film is preferably a conductive film that is chemically stable under the operation environment of the fuel cell and can prevent permeation of moisture and oxygen.

Specifically, the conductive ceramic layer 14 may be made of titanium carbide or titanium nitride. These conductive ceramic layers 14 can be easily formed through surface treatment in a plasma atmosphere containing hydrocarbon gas or nitrogen gas. It is considered that the titanium nitride, the titanium carbide, or the like is oxidized and the contact resistance is remarkably increased when exposed to an electrolytic solution under the operation environment of the fuel cell, but it has been confirmed that the anticorrosion barrier layer 16 containing titanium nitride or titanium carbide of the present invention is not oxidized, and the contact resistance does not increase because it is covered with the conductive carbon film 15.

The conductive carbon film 15 plays a role of improving corrosion resistance and reducing contact resistance at the contact interface with the GDL electrodes 1 and 2. The resistivity of the conductive carbon film, for example, DLC (diamond-like carbon) varies depending on the production method. The DLC film generated at normal temperature has an amorphous structure and becomes a high-resistance film close to an insulator, but a low-resistance DLC film containing many microcrystals having sp2 hybrid orbitals is obtained in the DLC film generated at a base material temperature of 200°C or more. Since the GDL electrodes 1 and 2 are graphite also having sp2 hybrid orbitals, the contact resistance between them can be reduced by using a low-resistance DLC film. The current generated by the cell 4 flows through the separator 110. Thus, it is desirable to use a material having sufficiently small electric resistance of the conductive carbon film itself and contact resistance at the contact interface between the conductive carbon film and the electrodes. For example, it is desirable that the resistance value per unit area in a thickness direction of the conductive carbon film is 1 mΩ or less, and the contact resistance at an interface is 5 mΩ·cm² or less.

The resistivity of the conductive carbon film 15 is preferably as low as possible, but the minimum value of the resistivity of the conductive carbon film is about 1 mQ cm. A suitable range of the resistivity of the conductive carbon film is 1 mQ cm to 10 Ω·cm, and a more suitable range is 1 mΩ·cm to 1 Ω·cm. This is because when the resistivity of the conductive carbon film is too large, the internal resistance of the fuel cell increases, and the power loss increases, which is not practical.

In the present specification, it is assumed that the conductive carbon film is a carbon film having a resistivity of 1 Q cm or less. Not only a high-purity carbon film, but also a carbon film containing a required amount of impurity elements such as nitrogen and boron may be used. The conductive carbon film can be produced by direct current discharge of a working gas containing a hydrocarbon gas or a plasma CVD method using high frequency discharge. The resistivity of the conductive carbon film depends on the base material temperature at the time of film formation, and a suitable base material temperature is 150 to 400°C.

The thickness of the conductive carbon film 15 is 20 nm or more in view of its effect, and 500 nm or less in view of productivity. The thickness is preferably 30 to 200 nm. When the thickness is 10 nm or less, a sufficient effect of the anticorrosion barrier layer cannot be obtained, and when the thickness is 300 nm or more, the film formation time becomes long, which is disadvantageous in terms of productivity. The passivation film 17 seals these penetrating defect portions to suppress corrosion of the surface of the metal base material and elution of metal ions.

Since a current having a high current density flows through the anticorrosion barrier layer, it is desirable that the resistance is as low as possible. The resistivity of titanium nitride or titanium carbide is several 10 mΩ·cm depending on the production method. For example, in the case of an anticorrosion barrier layer having a resistivity of 1 Ω·cm and a thickness of 100 nm, the resistance value per unit area in the thickness direction is 0.1 mΩ, which is an allowable range.

In the implementation step of the metal separator 110 according to the present invention, the anticorrosion barrier layer 16 is formed on the surface of the sheet-like aluminum base material 11, and then the metal base material is molded into the separator 110 having the grooves 6, 7 and the like with an uneven shape to be a gas channel by press working. When press working is performed, the titanium metal layer 13 also expands and contracts as the aluminum base material 11 expands and contracts, and thus peeling or cracking of the titanium metal layer does not occur, but there is a possibility that the penetrating defect portion D2 such as cracking or peeling occurs in the anticorrosion barrier layer 16 including the conductive carbon film 15.

When press working is performed to form a necessary separator shape at the time of forming the anticorrosion barrier layer or after forming the anticorrosion barrier layer, generation of fine defects D 1 due to pinholes, dust, and the like, and generation of penetrating defects D2 due to cracks and peeling cannot be completely avoided. These fine defect portions need to be sealed or passivated.

According to the present invention, it has been found that the problem can be solved by using an aluminum base material in which the passivation metal layer 13, for example, a titanium metal layer is coated on the surface of the aluminum base material. That is, even when the penetrating defect portion D2 such as a crack or peeling has occurred in the anticorrosion barrier layer 16, it is possible to substantially seal the hole by the passivation treatment as long as the surface exposed to the penetrating defect portion is a passivation metal.

As the passivation metal, an alloy containing titanium, chromium, aluminum, or zirconium as a main component can be used as the passivation metal.

Various studies have been made on the passivation treatment, and it has been found that a method of passivating by immersing in a concentrated nitric acid solution having a concentration of 30% or more, a hydrogen peroxide water having strong oxidizing power, or the like is effective. Even when the hydrogen peroxide water containing ozone is compared with a conventionally used passivation treatment method using a concentrated nitric acid solution, the effect thereof is equal to or more than that, and high corrosion resistance can be obtained. In addition, the passivation treatment method with hydrogen peroxide water is environmentally friendly and inexpensive. However, the method is not limited to the passivation treatment method using hydrogen peroxide water.

Further, according to the present invention, the metal base material surface of the defect portion of the anticorrosion barrier layer can be passivated by exposing the metal base material surface to an ozone atmosphere or an oxygen plasma atmosphere after formation of the anticorrosion barrier layer or after press molding. In this passivation treatment method, the base material temperature is preferably 70°C or more to 450°C. It has been found that the contact resistance with the GDL can be significantly reduced by performing the passivation treatment in an ozone atmosphere or an oxygen plasma atmosphere.

According to the present invention, the conductive carbon film may be a conductive resin film or a stacked film of a conductive carbon film and a conductive resin film. According to Patent Literature 3, the conductive resin film uses a phenol resin, an epoxy resin, or the like as a resin matrix, and it contains needle-like or flat graphite particles having a major axis of 1 µm to 30 µm as a conductive filler therein. The contact resistance depends on the volume fraction of the graphite particles, and is usually preferably 30 vol% to 70 vol%. When the volume fraction of the graphite particles contained in the conductive resin film is 70% or more, cracks are generated on the surface, and when the volume fraction is 30% or less, contact resistance is 50 mΩ·cm² or more, which is not preferable. In addition, the thickness of the conductive resin film is preferably 5 µm to 30 µm, and when the thickness is less than 5 µm, sufficient corrosion resistance cannot be obtained. When the thickness exceeds 30 µm, the time required for formation becomes unnecessarily long, and productivity is poor.

According to the present invention, corrosion resistance is improved by sandwiching a conductive carbon film between the metal separator base material and the conductive resin film. In addition, graphite particles having a particle size of 0.1 µm to 5 µm can be used as the conductive filler. Thus, the thickness of the conductive resin film can be set to 5 µm or less, and the contact resistance can also be set to 5 mΩ·cm² or less. A suitable thickness of the conductive resin film is 0.3 µm to 10 µm, and a more suitable thickness is 0.5 µm to 5 µm.

### <Example 1>

An aluminum alloy plate (Al3003) having a width of 6 cm and a length of 18 cm was used as an aluminum base material, the surface thereof was subjected to chemical polishing and plasma cleaning treatment, and then a titanium metal layer having a thickness of 150 nm was formed by a titanium arc vapor deposition method while the base material temperature was maintained at 300°C. A DLC film having a thickness of 100 nm was stacked on the surface by a plasma CVD method while the base material temperature was maintained at 300°C to form an anticorrosion barrier layer.

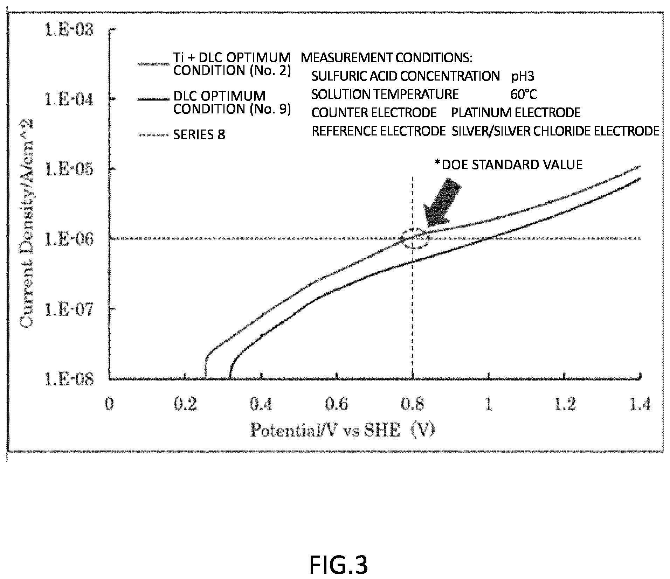

Fig. 3 illustrates corrosion resistance evaluation results obtained by an electrochemical method. The characteristic potential (pitting corrosion generation potential) is 1.4 V or more, which sufficiently clears the USA DOE standard value of 0.8 V or more and 1 µA/cm² or less of leakage current.

### <Example 2>

A single-cell fuel cell was formed using an aluminum alloy separator having the above-described performance. A single-cell fuel cell was formed using NR211 (film thickness: 25 µm) manufactured by Dupont as a solid polymer electrolyte membrane and TEC10E50E (0.35/0.35 mg·cm²) manufactured by TKK as an anode/cathode catalyst layer.

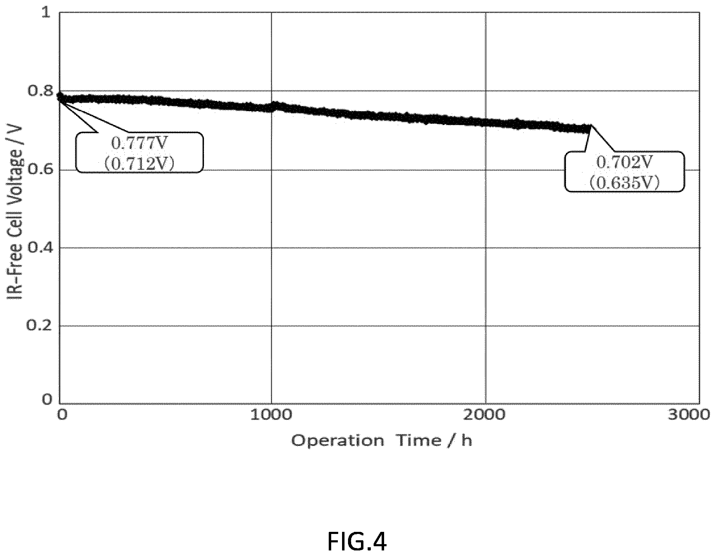

A long-term power generation test was performed at a cell temperature of 80°C, a humidification temperature of 75°C, and a power generation current density of 0.2 A/cm². Fig. 4 illustrates a temporal change in IR-free cell voltage. The initial evaluation value of the generated voltage was 0.777 V, but the generated voltage after 2000 hours of continuous operation was 0.720 V, and the voltage drop rate was 7.3% per 2000 hours. The self-target value of 10% was cleared.

Although the representative embodiments have been described above, the present invention is not limited at all by the above embodiments unless the gist thereof is changed. The technology disclosed in the present invention can also be applied to a metal separator molded as a separator. That is, the present invention can also be applied to a production method in which the order of the implementation step 1 and the implementation step 2 is reversed, and the sheet-like metal base material 11 is molded in advance into the separator 110 having the grooves 6, 7 and the like with an uneven shape serving as a gas channel, and then the anticorrosion barrier layer 16 having the titanium metal layer 13 and the DLC film formed on the surface thereof is formed. Further, it is possible to put into practical use an aluminum separator excellent in corrosion resistance by forming a corrosion resistance film 17 (passivation film) at a penetrating defect portion present in the anticorrosion barrier layer 16 as necessary.

### Industrial Applicability

According to the present invention, it is possible to provide a fuel cell separator excellent in corrosion resistance.

### Reference Signs List

1, 2: gas diffusion member
11: metal base material
12: interface alloy layer
13: titanium metal layer
14: titanium carbide layer
15: conductive carbon film
16: anticorrosion barrier layer
17: corrosion resistance film
110: separator
D 1: fine defect portion
D2: penetrating defect portion

## Claims

1. A fuel cell separator comprising a passivation metal layer and a conductive carbon film stacked on a surface of an aluminum metal base material,
wherein the fuel cell separator comprises an alloy layer including an aluminum metal of the aluminum metal base material and a passivation metal of the passivation metal layer at a bonding interface between the aluminum metal base material and the passivation metal layer.

2. The fuel cell separator according to claim 1, wherein the fuel cell separator further comprises a conductive ceramic layer at a bonding interface between the passivation metal layer and the conductive carbon film.

3. The fuel cell separator according to claim 1, wherein the passivation metal is an alloy containing titanium, chromium, zirconium, or nickel as a main component.

4. The fuel cell separator according to claim 2, wherein the conductive ceramic layer is titanium carbide or titanium nitride.

5. The fuel cell separator according to claim 1, wherein the conductive carbon film is a diamond-like carbon film, the conductive carbon film having a thickness of 20 nm to 500 nm and a resistivity of 0.01 Ω·cm to 1 Ω·cm.

6. The fuel cell separator according to claim 1, wherein the conductive carbon film is a conductive resin film, the conductive carbon film having a thickness of 2 µm to 50 µm and a resistivity of 0.01 Ω·cm to 1 Ω·cm.

7. A method for producing the fuel cell separator according to claim 1, the fuel cell separator including an anticorrosion barrier layer formed of the passivation metal layer on the surface of the aluminum metal base material and the conductive carbon film stacked on a surface of the passivation metal layer,
wherein the method comprises forming an alloy layer including the aluminum metal and the passivation metal, and a conductive ceramic layer at a bonding interface between the passivation metal layer and the conductive carbon film while maintaining a base material temperature at 200°C to 400°C after formation of the anticorrosion barrier layer.

8. The method for producing the fuel cell separator according to claim 7, wherein the method comprises immersing the separator in concentrated nitric acid or hydrogen peroxide water after formation of the anticorrosion barrier layer or after press working.

9. The method for producing the fuel cell separator according to claim 7 or 8, wherein the method comprises exposing the separator to an ozone atmosphere or an oxide plasma atmosphere after formation of the anticorrosion barrier layer or after press working.
